# EUROPEAN PATENT SPECIFICATION

(11) **EP 0 549 302 B1**
(45) Date of publication and mention of the grant of the patent: **24.01.1996**
(21) Application number: 92311650.3
(22) Date of filing: 21.12.1992
(51) Int. Cl.: C03B 7/10

(54) **Shear mechanism for glass forming machine**
Abschneidescherenmechanismus für eine Glasformmaschine
Mécanisme de ciseaux d'une machine à fabriquer des objets en verre

(30) Priority: 24.12.1991 US 814121
(43) Date of publication of application: 30.06.1993
(73) Proprietor: Emhart Glass Machinery Investments Inc., Wilmington, Delaware 19801 (US)
(72) Inventor: Grant, Marty J., Kensington, Connecticut 06037 (US); Pinkerton, Steven J., Avon, Connecticut 06001 (US)
(74) Representative: Randall, John Walter

(56) References cited:
- EP-A- 0 202 809
- EP-A- 0 294 057

## Description

In conventional individual section (I.S.) glassware forming machines, glassware is formed from discrete gobs sheared by a shear mechanism comprising reciprocating opposed shears from a runner of molten glass delivered by a feeder. The length and width of a gob generally corresponds to the height and circumference of the formed glassware.

In a conventional shear mechanism the shears have a fixed stroke which is large enough for the largest containers. This means that the stroke is larger than necessary for smaller gobs. Smaller glassware takes less time to form than does large glassware and, as a result, machine speed can be increased as gob size decreases.

It is often desired, in a glass machine, to replace pneumatic or hydraulic operation of a mechanism by the use of electric motors which frequently allow more precise control of the mechanism. From EP-A-0 202 809 a shear mechanism as defined in the pre-characterizing part of claim 1 is known.

When, a shear mechanism utilises a servo motor, a dwell time is provided between the movement of the shears. This dwell time can be reduced to increase the rate at which gobs may be cut, but too great a reduction of the dwell time puts an undesirable strain on the servo motor which benefits from a recovery period in between operating to move the shears, thus placing a limitation on the cycle time of the shear mechanism.

It is an object of the present invention to provide a shear mechanism operated by a servo motor which can operate at high cycle rates.

The desirable recovery period for a servo motor in intermittent operation is dependent on the maximum speed of the motor.

We have found that increased speed of operation of the shears may be achieved by reducing the amount of movement of the shears, thus reducing the necessary maximum speed of the servo motor and thus allowing the dwell time between cycles to be reduced.

The invention provides a shear mechanism for shearing discrete gobs from at least one runner of molten glass comprising
a pair of opposed shear assemblies mounted for reciprocating displacement,
means for conjointly displacing the shear assemblies including
a servo motor and
means for controlling the operation of the servo motor, characterized in that said means for controlling the operation of said servo motor include
means for storing a displacement profile for displacing the shear assemblies a predetermined stroke from a retracted location to an advanced shearing location,
means for determining whether the cycle rate of the shear assemblies is above or below a selected rate,
means for scaling the displacement profile by a selected percentage when the cycle rate exceeds the selected rate so that the shear assemblies will be displaced by a stroke which is the selected percentage of the predetermined stroke, and
means for relocating the retracted position by the difference between the length of the predetermined and scaled strokes to maintain the advanced shearing location.

The present invention will become more clear from the following description to be read with reference to the accompanying drawings of a presently preferred embodiment incorporating the invention.

Referring to the drawings :
Figure 1 is a top view of a shear mechanism
Figure 2 is a velocity profile for the servo motor during displacement of the mechanism; and

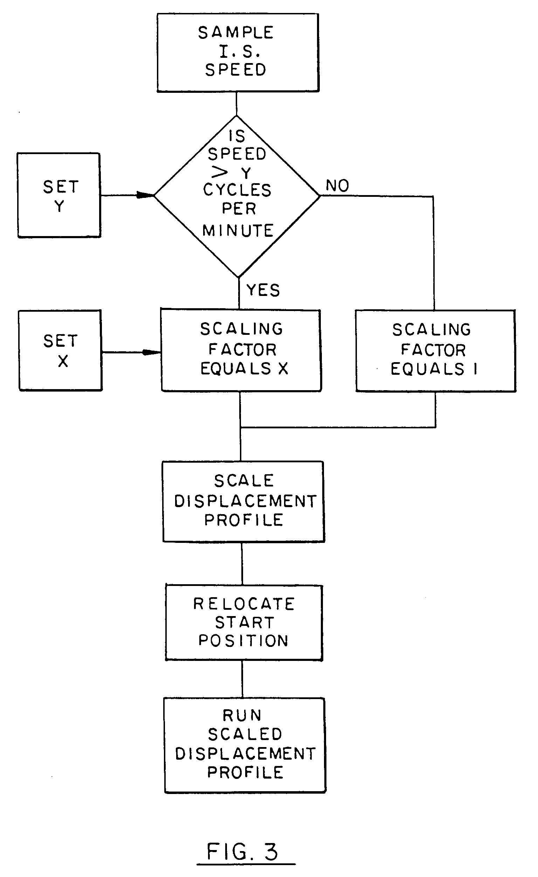

Figure 3 is a logic diagram for the shear mechanism motor drive controller.

Opposed shear assemblies 10, 12 are mounted for reciprocation on a pair of guide rails 14 which extend between the front 16 and rear walls 18 of the frame 20. These assemblies are conjointly driven by a rack and pinion assembly having a pair of racks 22, one connected to each shear assembly and a central pinion 24. The pinion is connected to the rotating drive shaft 26 of a servo motor 28, which is driven by a motor drive controller 40.

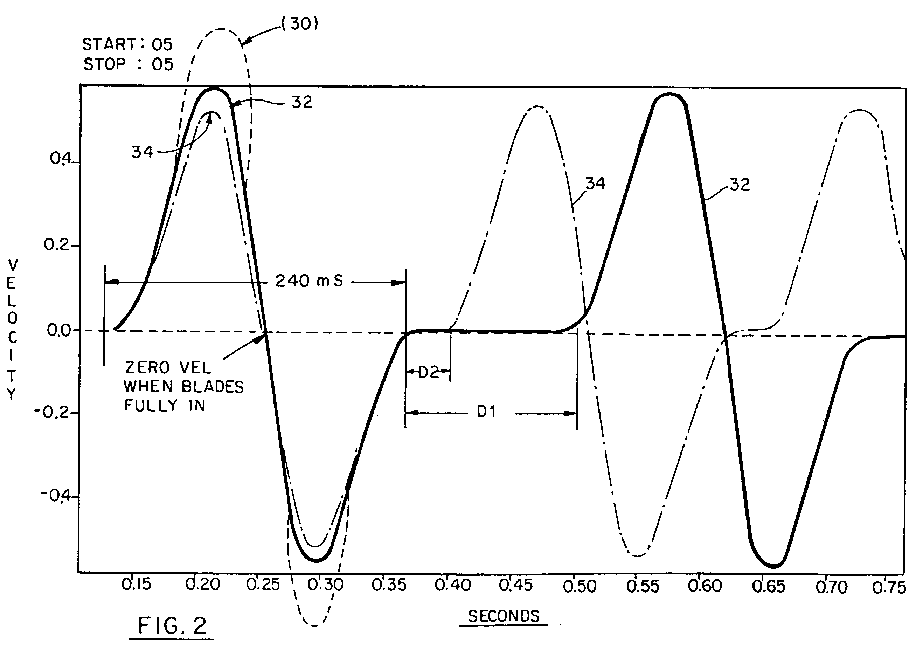

Figure 2 presents a motor velocity versus time plot showing the motor velocity during the cyclic reciprocation of the shears between retracted and advanced positions. It is understood that a cycle of operation of the shears is required each cycle of the I.S. machine it is supplying, and is normally initiated by a pulse from the control system of the I.S. machine. The solid profile 32 represents a velocity profile that is within the desired operating range of the servo motor. This profile which defines one cycle of motor velocity over a fixed time period (240 milliseconds) will displace the shear a predetermined distance or stroke (4 inches or 10.16 cm) from a retracted position to an advanced position where the blades are fully in and then back to the retracted position and allows for a dwell time (D1). The cycle time shown is 0.375 seconds, which allows for a rate of 160 cycles per minute. The dwell time D1 can, without causing undue strain on the motor, be reduced to enable a cycle rate of up to 190 cycles per minute.

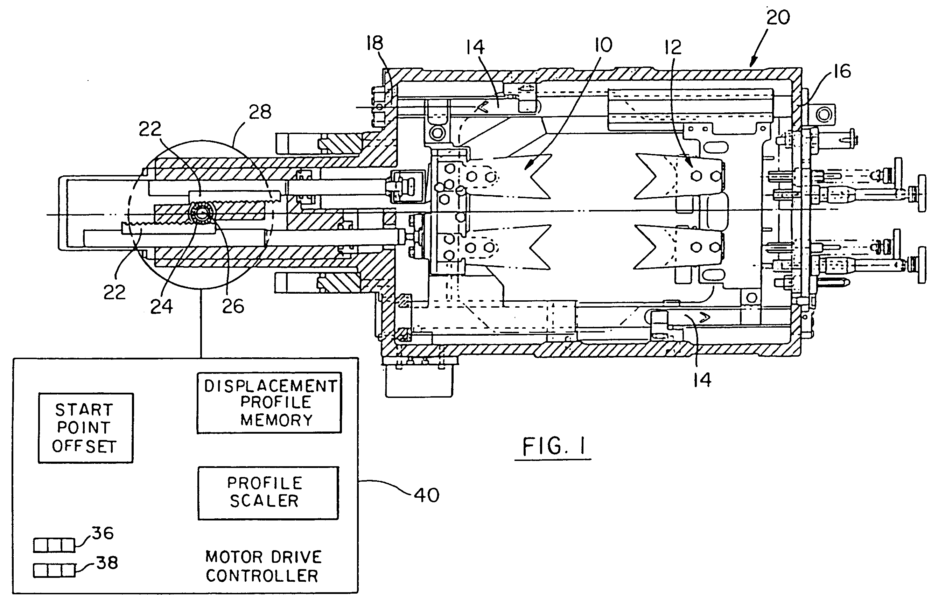

When cycle rate is increased beyond a selected rate (190 cycles per minute in the illustrated embodiment) the stroke is reduced to 3 ¾" (.9375 x 4" or 9.525 cm) by scaling this profile by this same percentage (93.75%). The percentage by which the profile is scaled is selected so that the cycle rate can be increased to 240 cycles per minute without causing the servo motor to operate beyond its operating limit. Broken line 34 represents this scaled profile. Both the maximum cycle rate (Y) and the scaling percentage (X) could be set as desired with conventional rate 36 and scaling factor 38 inputs which are shown schematically in Figure 1. Reduction of the maximum speed of the motor by this amount allows the dwell time to be reduced to D2, the cycle time to 0.270 seconds and the cycle rate to be increased to 220 cycles per minute. By an appropriate scaling reduction the cycle time can be reduced to 0.250 seconds and the rate increased to 240 cycles per second.

The motor drive controller 40 samples the speed of the associated I.S. machine and determines whether the machine speed exceeds the maximum [190] set cycle rate (Y). If not the scale is 1 and the existing displacement profile which is stored in the displacement profile memory of the motor drive controller controls the displacement of the shears between end points which define the longer stroke. If the cycle rate exceeds this maximum, the displacement profile is scaled by the profile scaler of the motor drive controller 40, the start position is relocated for the shorter stroke and the displacement profile is run.

## Claims

1. A shear mechanism for shearing discrete gobs from at least one runner of molten glass comprising
a pair of opposed shear assemblies (10,12) mounted for reciprocating displacement,
means for conjointly displacing said shear assemblies including
a servo motor (28) and
means (30) for controlling the operation of said servo motor (28), characterized in that said means (30) for controlling the operation of said servo motor (28) include
means for storing a displacement profile for displacing said shear assemblies a predetermined stroke from a retracted location to an advanced shearing location,
means for determining whether the cycle rate of said shear assemblies is above or below a selected rate,
means for scaling said displacement profile by a selected percentage when said cycle rate exceeds said selected rate so that said shear assemblies will be displaced by a stroke which is said selected percentage of said predetermined stroke, and
means for relocating said retracted position by the difference between the length of said predetermined and scaled strokes to maintain said advanced shearing location.

2. A shear mechanism according to claim 1, further comprising means (36) for defining said selected cycle rate.

3. A shear mechanism according to claim 1, further comprising means (38) for defining said selected scaling percentage.

## Patentansprüche

1. Schermechanik zum Scheren diskreter Posten von mindestens einem Glasschmelzestrang mit
einem Paar gegenüberliegender und hin- und herbewegbar gelagerter Scheranordnungen (10, 12) und
einer Vorrichtung, um die Scheranordnungen gemeinsam zu bewegen, die
einen Servomotor (28) und
eine Einrichtung (30) zum Steuern des Betriebs des Servomotors (28) aufweist,
**dadurch gekennzeichnet,** daß die Einrichtung (30) zum Steuern des Betriebs des Servomotors (28)
eine Einrichtung zum Speichern eines Bewegungsprofils für die Bewegung der Scheranordnungen in einem vorbestimmten Hub von einer eingefahrenen in eine ausgefahrene Position,
eine Einrichtung zur Bestimmung, ob die Zyklusrate der Scheranordnungen über oder unter einem gewählten Wert liegt,
eine Einrichtung zum Skalieren des Bewegungsprofils um einen gewählten prozentualen Anteil, wenn die Zyklusrate den gewählten Wert übersteigt, so daß die Scheranordnungen um einen Hub verfahren werden, der gleich dem gewählten prozentualen Anteil des vorbestimmten Hubs ist, sowie
eine Einrichtung aufweist, die die eingefahrene Position um die Differenz zwischen dem vorbestimmten und dem skalierten Hub ändert, um die vorgeschobene Scherposition beizubehalten.

2. Schermechanik nach Ansprucvh 1 mit einer Einrichtung (36) zur Vorgabe der gewählten Zyklusrate.

3. Schermechanik nach Anspruch 1 mit einer Einrichtung (38) zur Vorgabe des gewählten Skalier-Prozentanteils.

## Revendications

1. Mécanisme de cisaillement pour cisailler des paraisons discrètes d'au moins une coulée de verre fondu comprenant :
une paire d'ensembles de cisaillement opposés (10, 12) montés pour effectuer un déplacement de va-et-vient,
des moyens pour déplacer conjointement lesdits ensembles de cisaillement comportant :
un servomoteur (28) et
des moyens (30) pour commander le fonctionnement dudit servomoteur (28), caractérisé en ce que lesdits moyens (30) pour commander le fonctionnement dudit servomoteur (28) comportent
des moyens pour stocker un profil de déplacement afin de produire un déplacement desdits ensembles de cisaillement d'une source prédéterminée entre une position rétractée et une position de cisaillement avancée,
des moyens pour déterminer si la cadence de production desdits ensembles de cisaillement est supérieure ou inférieure à une cadence sélectionnée,
des moyens pour modifier l'échelle dudit profil de déplacement d'un pourcentage sélectionné lorsque ladite cadence de production dépasse ladite cadence sélectionnée, afin que lesdits ensembles de cisaillement soient déplacés d'une course qui est égale audit pourcentage sélectionné de ladite course prédéterminée, et
des moyens pour décaler ladite position rétractée d'une distance égale à la différence entre la longueur desdites courses prédéterminée et à échelle modifiée, afin de conserver ladite position de cisaillement avancée.

2. Mécanisme de cisaillement selon la revendication 1, comprenant en outre des moyens (36) pour définir ladite cadence de production sélectionnée.

3. Mécanisme de cisaillement selon la revendication 1, comprenant en outre des moyens (38) pour définir ledit pourcentage de modification d'échelle sélectionné.
